# EUROPEAN PATENT APPLICATION

(11) **EP 4 407 467 A1**
(43) Date of publication of application: **31.07.2024**
(21) Application number: 22879925.0
(22) Date of filing: 22.07.2022
(51) Int. Cl.: G06F 11/36

(54) **AUTOSAR SOFTWARE VERIFICATION METHOD AND APPARATUS, DEVICE, AND STORAGE MEDIUM**

(30) Priority: 15.10.2021 CN 202111205584
(71) Applicant: Huawei Technologies Co., Ltd., Shenzhen, Guangdong 518129 (CN)
(72) Inventor: ZHANG, Miaomiao, Shanghai 201804 (CN); TENG, Yu, Shanghai 201804 (CN); DU, Bowen, Shanghai 201804 (CN); MI, Junri, Shanghai 201804 (CN); SU, Yu, Shanghai 201804 (CN); KONG, Hui, Shenzhen, Guangdong 518129 (CN)
(74) Representative: Isarpatent
(86) International application number: PCT/CN2022/107360
(87) International publication number: WO 2023/060978

(57) **Abstract**

Embodiments of this application provide an AUTOSAR software verification method and apparatus, a device, and a storage medium. The method includes: obtaining architecture information of a system architecture of AUTOSAR software, where the architecture information includes information about an architecture element in the system architecture; searching for, based on the information about the architecture element, a target timed automaton template corresponding to the architecture element from a pre-constructed timed automaton template, where the timed automaton template is constructed based on an AUTOSAR standard, and the timed automaton template represents a behavior of the system architecture in terms of time; generating a timed automaton network of the system architecture based on the information about the architecture element and the target timed automaton template corresponding to the architecture element; and performing formal verification on the timed automaton network based on pre-obtained verification constraint information. According to embodiments of this application, development costs and error correction costs of the AUTOSAR software can be reduced, and development efficiency of the AUTOSAR software is improved.

## Description

This application claims priority to Chinese Patent Application No. 202111205584.2, filed with the China National Intellectual Property Administration on October 15, 2021 and entitled "AUTOSAR SOFTWARE VERIFICATION METHOD AND APPARATUS, DEVICE, AND STORAGE MEDIUM", which is incorporated herein by reference in its entirety.

### TECHNICAL FIELD

This application relates to the field of computer technologies, and specifically, to an AUTOSAR software verification method and apparatus, a device, and a storage medium.

### BACKGROUND

With development of automobile embedded software development process, more and more automobile parts manufacturers and original equipment manufacturers (Original Equipment Manufacturers, OEMs) use an automotive open system architecture (Automotive Open System Architecture, AUTOSAR) to develop software. In order to ensure safety and reliability of a vehicle system, a developed AUTOSAR software should be tested.

A development process of the AUTOSAR software includes a code generation phase of an application. Currently, the AUTOSAR software is usually tested after the code generation phase of the application. However, as the code generation phase of the application is already in a later phase of development of the AUTOSAR software, verification of the AUTOSAR software performed after the code generation phase of the application results in relatively high development costs and error correction costs, and reduces development efficiency of the AUTOSAR software.

### SUMMARY

Embodiments of this application provide an AUTOSAR verification method and apparatus, a device, and a storage medium. In this solution, a system architecture of AUTOSAR software is converted into a timed automaton network based on a timed automaton template corresponding to a pre-constructed AUTOSAR standard, to complete verification of the AUTOSAR software. The AUTOSAR software does not need to be verified after the AUTOSAR software is converted into code, reducing development costs and error correction costs, and improving development efficiency of the AUTOSAR software.

According to a first aspect, an embodiment of this application provides an AUTOSAR software verification method, including:
obtaining architecture information of a system architecture of AUTOSAR software, where the architecture information includes information about an architecture element in the system architecture;
searching for, based on the information about the architecture element, a target timed automaton template corresponding to the architecture element from a pre-constructed timed automaton template, where the timed automaton template is constructed based on an AUTOSAR standard, and the timed automaton template represents a behavior of the system architecture in terms of time;
generating a timed automaton network of the system architecture based on the information about the architecture element and the target timed automaton template corresponding to the architecture element; and
performing formal verification on the timed automaton network based on pre-obtained verification constraint information.

In a possible implementation, the architecture element includes a runnable entity and a task, and the architecture information includes runnable entity information of the runnable entity and task information of the task; and
the searching for, based on the information about the architecture element, a target timed automaton template corresponding to the architecture element from a plurality of pre-constructed timed automaton templates includes:
searching for, based on the task information of the task, a target timed automaton template corresponding to the task from the plurality of timed automaton templates; and
searching for, based on the runnable entity information of the runnable entity, a target timed automaton template corresponding to the runnable entity from the plurality of timed automaton templates.

In a possible implementation, the architecture element includes a runnable entity and a task, and the architecture information includes runnable entity information of the runnable entity and task information of the task; and
the generating a timed automaton network of the system architecture based on the information about the architecture element, pre-obtained runtime information, and a target timed automaton template corresponding to each architecture element includes:
determining runtime information of the runnable entity based on the runnable entity information of the runnable entity;
generating, based on the runnable entity information of the runnable entity, the runtime information, and a timed automaton template corresponding to the runnable entity, a timed automaton corresponding to the runnable entity;
generating, based on the task information of the task and a timed automaton template corresponding to the task, a timed automaton corresponding to the task; and
generating the timed automaton network of the system architecture based on the timed automaton corresponding to the runnable entity and the timed automaton corresponding to the task.

In a possible implementation, the runnable entity information of the runnable entity includes at least one communication mode corresponding to the runnable entity; and the searching for, based on the architecture information, a target timed automaton template corresponding to each of the plurality of architecture elements from a plurality of pre-constructed timed automaton templates includes:
searching for a target timed automaton template of the runnable entity in the at least one communication mode from the plurality of timed automaton templates; and
the generating, based on the runnable entity information of the runnable entity, the runtime information, and a timed automaton template corresponding to the runnable entity, a timed automaton corresponding to the runnable entity includes:
   generating a target timed automaton of the runnable entity in each of the at least one communication mode based on the runnable entity information of the runnable entity, the runtime information, and the target timed automaton template of the runnable entity in the at least one communication mode; and
   merging a target timed automaton template of the runnable entity in each communication mode to obtain the timed automaton of the runnable entity.

In a possible implementation, the obtaining architecture information of a system architecture of AUTOSAR software includes:
reading a development file of the AUTOSAR software; and
parsing the development file of the AUTOSAR software to obtain runnable entity information of a runnable entity and task information of a task.

In a possible implementation, the runnable entity information of the runnable entity includes an event of activating the runnable entity, and the task information of the task includes an event of activating the task; and the parsing the architecture information of the system architecture to obtain runnable entity information of a runnable entity and task information of a task includes:
determining, based on a task of the event of activating the runnable entity and the event of activating the task, a runnable entity and a task that have a mapping relationship; and
generating mapping relationship information between the runnable entity and the task, and filtering out a runnable entity and a task that do not have a mapping relationship.

In a possible implementation, the model verification constraint information includes a time attribute of the system architecture and an attribute value of the time attribute; and the performing formal verification on the timed automaton network based on pre-obtained verification constraint information includes:
searching for a target timed automaton template corresponding to the time attribute from a plurality of timed automaton templates;
generating, based on the attribute value of the time attribute, the architecture information, and an auxiliary timed automaton template, an auxiliary timed automaton corresponding to the time attribute; and
performing formal verification on the timed automaton network and the auxiliary timed automaton.

In a possible implementation, the performing formal verification on the timed automaton network and the auxiliary timed automaton based on the model verification constraint information includes:
generating a verification file of the system architecture based on the timed automaton network and the auxiliary timed automaton; and
inputting the verification file into a formal verification tool for formal verification.

According to a second aspect, an embodiment of this application provides an AUTOSAR software verification apparatus, including:
an obtaining module, configured to obtain architecture information of a system architecture of AUTOSAR software, where the architecture information includes information about an architecture element in the system architecture;
a matching module, configured to search for, based on the information about the architecture element, a target timed automaton template corresponding to each of a plurality of architecture elements from a pre-constructed timed automaton template, where the timed automaton template is constructed based on an AUTOSAR standard, and the timed automaton template represents a behavior of the system architecture in terms of time;
a generation module, configured to generate a timed automaton network of the system architecture based on the information about the architecture element and the target timed automaton template corresponding to each architecture element; and
a verification module, configured to perform formal verification on the timed automaton network based on pre-obtained verification constraint information.

In a possible implementation, the architecture element includes a runnable entity and a task, the information about the architecture element includes runnable entity information of the runnable entity and task information of the task, and the matching module is configured to search for, based on the task information of the task, a target timed automaton template corresponding to the task from a plurality of timed automaton templates; and
search for, based on the runnable entity information of the runnable entity, a target timed automaton template corresponding to the runnable entity from the plurality of timed automaton templates.

In a possible implementation, the architecture element includes a runnable entity and a task, the architecture information includes runnable entity information of the runnable entity and task information of the task, and the generation module is configured to determine runtime information of the runnable entity based on the runnable entity information of the runnable entity;
generate, based on the runnable entity information of the runnable entity, the runtime information, and a timed automaton template corresponding to the runnable entity, a timed automaton corresponding to the runnable entity;
generate, based on the task information of the task and a timed automaton template corresponding to the task, a timed automaton corresponding to the task; and
generate the timed automaton network of the system architecture based on the timed automaton corresponding to the runnable entity and the timed automaton corresponding to the task.

In a possible implementation, the runnable entity information of the runnable entity includes at least one communication mode corresponding to the runnable entity; the matching module is configured to search for a target timed automaton template of the runnable entity in the at least one communication mode from the plurality of timed automaton templates; and
the generation module is configured to generate a target timed automaton of the runnable entity in each of the at least one communication mode based on the runnable entity information of the runnable entity, the runtime information, and the target timed automaton template of the runnable entity in the at least one communication mode; and
merge a target timed automaton template of the runnable entity in each communication mode to obtain the timed automaton of the runnable entity.

In a possible implementation, the obtaining module is configured to: read a development file of the AUTOSAR software; and parse the development file of the AUTOSAR software to obtain runnable entity information of a runnable entity and task information of a task.

In a possible implementation, the runnable entity information of the runnable entity includes an event of activating the runnable entity, the task information of the task includes the event of activating the task, and the obtaining module is configured to determine, based on a task of the event of activating the runnable entity and the event of activating the task, a runnable entity and a task that have a mapping relationship; and
generate mapping relationship information between the runnable entity and the task, and filter out a runnable entity and a task that do not have a mapping relationship.

In a possible implementation, the model verification constraint information includes a time attribute of the system architecture and an attribute value of the time attribute; and the verification module is configured to search for a target timed automaton template corresponding to the time attribute from the plurality of timed automaton templates;
generate, based on the attribute value of the time attribute, the architecture information, and an auxiliary timed automaton template, an auxiliary timed automaton corresponding to the time attribute; and
perform formal verification on the timed automaton network and the auxiliary timed automaton.

In a possible implementation, the verification module is configured to generate a verification file of the system architecture based on the timed automaton network and the auxiliary timed automaton; and
input the verification file into a formal verification tool for formal verification.

According to a third aspect, an embodiment of this application provides a computer device, including a processing unit and a storage unit, where the storage unit stores executable code, and when the processing unit executes the executable code, the method according to any one of the first aspect or the possible implementations of the first aspect is implemented.

According to a fourth aspect, an embodiment of this application provides a computer storage medium, including a processor and a memory, where the memory stores executable code, and when the processing unit executes the executable code, the method according to any one of the first aspect or the possible implementations of the first aspect is implemented.

According to a fifth aspect, an embodiment of this application provides a chip, where the chip is coupled to a memory, and is configured to execute a program stored in the memory, to implement the method according to any one of the first aspect or the possible implementations of the first aspect.

Another aspect of this application provides a program product, and a computer device runs the program product to implement the method according to any one of the first aspect or the possible implementations of the first aspect.

According to the AUTOSAR software verification method and apparatus, the device, and the storage medium provided in embodiments of this application, the timed automaton network of the system architecture of the AUTOSAR software is generated based on the timed automaton template converted from the AUTOSAR standard and the architecture information of the system architecture of the AUTOSAR software, so that a formal description can be performed on the system architecture of the AUTOSAR software, and formal verification can be performed on the timed automaton network. In this way, verification of the AUTOSAR software can be completed, and the AUTOSAR software does not need to be verified after the AUTOSAR software is converted into code, reducing development costs and error correction costs, and improving development efficiency of the AUTOSAR software.

### BRIEF DESCRIPTION OF DRAWINGS

FIG. 1 is a schematic diagram of a system architecture in an AUTOSAR standard according to an embodiment of this application;
FIG. 2 is a schematic diagram of a structure of an AUTOSAR software verification system according to an embodiment of this application;
FIG. 3 is a schematic diagram of a structure of another AUTOSAR software verification system according to an embodiment of this application;
FIG. 4 is a schematic flowchart of an AUTOSAR software verification method according to an embodiment of this application;
FIG. 5 is a schematic flowchart of a method for extracting architecture information of AUTOSAR software according to an embodiment of this application;
FIG. 6 is a schematic diagram of a human-computer interaction interface for file selection according to an embodiment of this application;
FIG. 7 is a schematic diagram of a human-computer interaction interface for system scheduling mode selection according to an embodiment of this application;
FIG. 8 is a schematic diagram of a timed automaton template corresponding to a runnable entity in a CS mode according to an embodiment of this application;
FIG. 9 is a schematic diagram of a human-computer interaction interface for determining a runtime of a runnable entity according to an embodiment of this application;
FIG. 10 is a schematic diagram of a timed automaton corresponding to a runnable entity in a CS mode according to an embodiment of this application;
FIG. 11 is a schematic diagram of a structure of an AUTOSAR software verification apparatus according to an embodiment of this application; and
FIG. 12 is a schematic diagram of a structure of a computer device according to an embodiment of this application.

### DESCRIPTION OF EMBODIMENTS

To make objectives, technical solutions, and advantages of embodiments of this application clearer, the following describes the technical solutions in embodiments of this application with reference to accompanying drawings.

In the description of embodiments of this application, words such as "example", "for example", or the like represents giving an example, an illustration, or a description. Any embodiment or design solution described as "example", or "for example" in embodiments of this application should not be explained as being more preferred or more advantageous than another embodiment or design solution. To be precise, the use of the term "example", "for example" or the like is intended to present a concept in a specific manner.

In the description of embodiments of this application, the term "and/or" describes only an association relationship between associated objects, and indicates that three relationships may exist. For example, A and/or B may indicate the following three cases: only A exists, only B exists, and both A and B exist. In addition, unless otherwise specified, the term "a plurality of" means two or more. For example, a plurality of systems are two or more systems, and a plurality of electronic devices are two or more electronic devices.

In addition, terms "first" and "second" are merely used for a description purpose, and shall not be understood as indicating or implying relative importance or implicitly including indicated technical features. Therefore, a feature limited by "first" or "second" may explicitly or implicitly include one or more such features. The terms "include", "comprise", "have", and their variants all mean "include but are not limited to", unless otherwise specifically emphasized in another manner.

The following explains and describes some terms in embodiments of this application. It should be noted that these explanations are for ease of understanding by a person skilled in the art, but do not constitute a limitation on the protection scope claimed in this application.

### (1) AUTOSAR standard

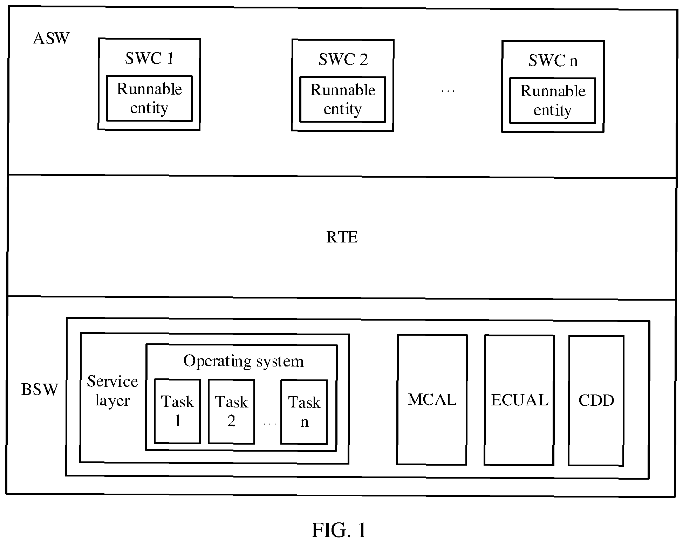

The AUTOSAR standard is a universal layered software framework designed for application development of an automobile electronics field, and a standard application programming interface (Application Programming Interface, API) is designed for various functional components, so that conventional distributed components can be quickly integrated into a unified system architecture. As shown in FIG. 1, in the AUTOSAR standard, an automotive electronic software architecture includes a basic software (Basic Software, BSW) layer, a runtime environment (Runtime Environment, RTE) layer, and an application software (Application Software, ASW) layer. The AUTOSAR standard is usually given in a form of a document, a model, or a template. In this embodiment of this application, the AUTOSAR standard is provided in a form of the template.

The application software layer is the top layer of the automotive electronic software architecture. The application software layer contains a plurality of software components (Software Component, SWC). A software component is a module that encapsulates some or all of the automotive electronic functions. The software component (SWC) package contains a specific function implementation of the software component and a corresponding description. The corresponding description of the software component records an attribute of the software component, including a used port, a port interface, a runnable entity, and an RTE event corresponding to the runnable entity, and is provided in a form of an XML (eXtensible Markup Language) file. The functional implementation of the software component depends on cooperation between the runnable entity and a runnable entity time. The software component contains one or more runnable entities. The runnable entity is a piece of program code used to implement a simple algorithm or a specific function.

The runtime environment is a middle layer of the automotive electronic software architecture. The runtime environment provides running components for application software at the application software layer, such as process time slice scheduling, data exchange between application layer modules, and data exchange between an application layer and the basic software layer. The runtime environment separates the application software layer from the basic software layer so that the application software can be reused. The runtime environment includes a plurality of RTE events for triggering the runnable entity.

The basic software layer is a lowest layer of the automotive electronic software architecture. The basic software layer includes a microcontroller abstraction layer (Microcontroller Abstraction Layer, MCAL), an electronic control unit abstraction layer (Electronic Control Unit Abstraction Layer, ECUAL), a service layer (Service Layer), and a complex device driver (Complex Device Driver, CDD). The basic software layer is driver software that is directly related to hardware, for example, operations on a memory, a communication register, and an I/O interface. The ECU abstraction layer unifies a basic function and an interface of the controller, such as CAN packet content parsing, gateway packet forwarding, and memory read/write process controlling. The service layer provides various background services for the application software layer, such as network management, memory management, a bus communication management service, and an operating system. The complex device driver (Complex Device Driver, CDD) provides a possibility for a user to write special device driver software. Herein, the operating system includes a plurality of tasks. As a basic unit of operating system scheduling, the task not only provides common resources such as context and stack space for the runnable entity, but also provides a priority for execution of the runnable entity. A specific execution function of the task is determined by a runnable entity that is mapped to the task. Therefore, one or more runnable entities that are closely related are often mapped to one task.

### (2) Formal verification

The formal verification is based on strict mathematics, and is a mathematical description development and verification technology for computer hardware and system software. The formal verification provides a mathematical theory-based description and verification manner for system engineering design, which may effectively ensure system trustworthiness. In addition, a formal method may help a developer and designer understand a system design more deeply and discover a system design disadvantage as early as possible.

### (3) AUTOSAR software

The AUTOSAR software is developed based on the AUTOSAR standard, for example, vehicle-mounted driver software. Based on the AUTOSAR standard, the system architecture of the AUTOSAR software includes the application software layer, the runtime environment, and the basic software layer.

### (4) timed automaton template

The timed automaton template means semantically equivalent conversion of a class of models into a set of timed automaton. In embodiments of this application, the AUTOSAR standard may be semantically equivalently converted into the timed automaton template. The timed automaton template corresponding to the AUTOSAR standard defines a state, a state invariance, migration, and the like of the timed automaton, and describes a time-related behavior of the AUTOSAR architecture defined in the AUTOSAR standard in various scenarios.

### (5) timed automaton

The timed automaton is a finite automaton extended by a real-valued variable (that is, a graph containing a finite node or a location set and a finite labeled edge set). The timed automaton can be considered as an abstract model of a timing system. These variables simulate a logical clock in the system, to be specific, initialize to zero when the system startups, and then increase synchronously at a same rate. A clock constraint is a guard on the edge that is used to limit a behavior of the timed automaton. When a clock value meets protection marked on the edge, conversion represented by the edge may be used. When the conversion is performed, the clock can be reset to zero. In embodiments of this application, based on a scenario of the time-related behavior and a parameter of the time-related behavior in the system architecture of the AUTOSAR software are extracted, and the timed automaton template, a timed automaton corresponding to the system architecture of the AUTOSAR software is generated.

### (6) AUTOSAR tool platform

The AUTOSAR tool platform (AUTOSAR Tool Platform, Artop) is an implementation of a common basic function of an AUTOSAR development tool. The Artop is a basic platform that implements the common basic function for development tools that can be used to design and configure AUTOSAR-compliant systems and ECUs. This can avoid repeated development of different tool vendors on a non-competitive basic platform, support a same development process, and provide a good test tool for each phase of the AUTOSAR development method.

The following describes in detail an architecture of an AUTOSAR software verification system provided in this solution.

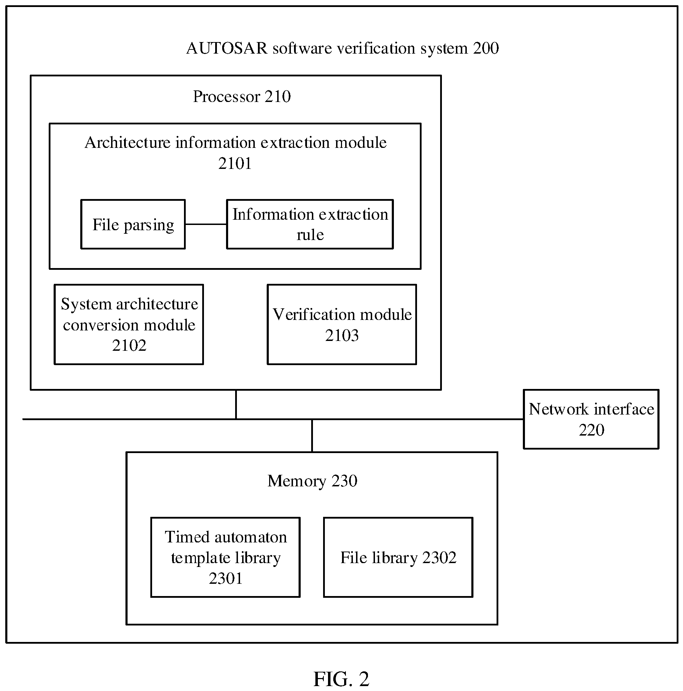

FIG. 2 is a schematic diagram of an architecture of an AUTOSAR software verification system 200 according to an embodiment of this application. As shown in FIG. 2, the AUTOSAR software verification system 200 may include a processor 210, a network interface 220, and a memory 230. The processor 210, the network interface 220, and the memory 230 may be connected by using a bus or in another manner. In this embodiment of this application, the processor 301 (or referred to as a central processing unit (Central Processing Unit, CPU)) is a computing core and a control core of the AUTOSAR software verification system. In an example, the processor 210 may extract architecture information of the system architecture of the AUTOSAR software based on a development file of the AUTOSAR software stored in the memory 230, and convert the architecture information of the system architecture into a semantically equivalent timed automaton network, to perform formal verification on the timed automaton network. This may determine whether the system architecture meets a user requirement. The network interface 220 may include a standard wired interface and a standard wireless interface (such as WI-FI or a mobile communication interface), and is controlled by the processor 210 to receive and send information about communication between the AUTOSAR software verification system and another device. The memory 230 (memory) is a memory module of the AUTOSAR software verification system, and is configured to store a program and data, for example, store the development file of the AUTOSAR software. It may be understood that, the memory 230 may be a high-speed RAM memory, or may be a non-volatile memory (non-volatile memory), for example, at least one magnetic disk memory. Optionally, the memory 230 may alternatively be at least one storage apparatus located far away from the foregoing processor 210.

In some embodiments, the memory 230 includes a timed automaton template library 2301 and a file library 2302. The timed automaton template library 2301 stores a plurality of pre-constructed timed automaton templates. The file library 2302 stores the development file of the AUTOSAR software. The processor 210 may include an architecture information extraction module 2101, a system architecture conversion module 2102, and a verification module 2103. The architecture information extraction module 2101 may read the development file of the AUTOSAR software stored in the file library 2302, and parse the development file of the AUTOSAR software according to an information extraction rule, to obtain the architecture information of the system architecture of the AUTOSAR software. The system architecture conversion module 2102 may convert the system architecture into the timed automaton network according to the architecture information of the system architecture. The verification module 2103 may include a formal verification tool and an auxiliary timed automaton building module. The formal verification tool can be used perform formal verification on the timed automaton network, and a verification result of the system architecture can be obtained. In the process of formal verification, the auxiliary timed automaton building module can also construct an auxiliary automaton template, to complete verification of the timed automaton network.

In some embodiments, the AUTOSAR software verification system provided in this embodiment of this application may be a computer device. The computer device may be a tablet computer, a desktop computer, a laptop computer, a handheld computer, a notebook computer, an ultra-mobile personal computer (ultra-mobile personal computer, UMPC), or the like. A specific type of the computer device is not specially limited in this embodiment of this application.

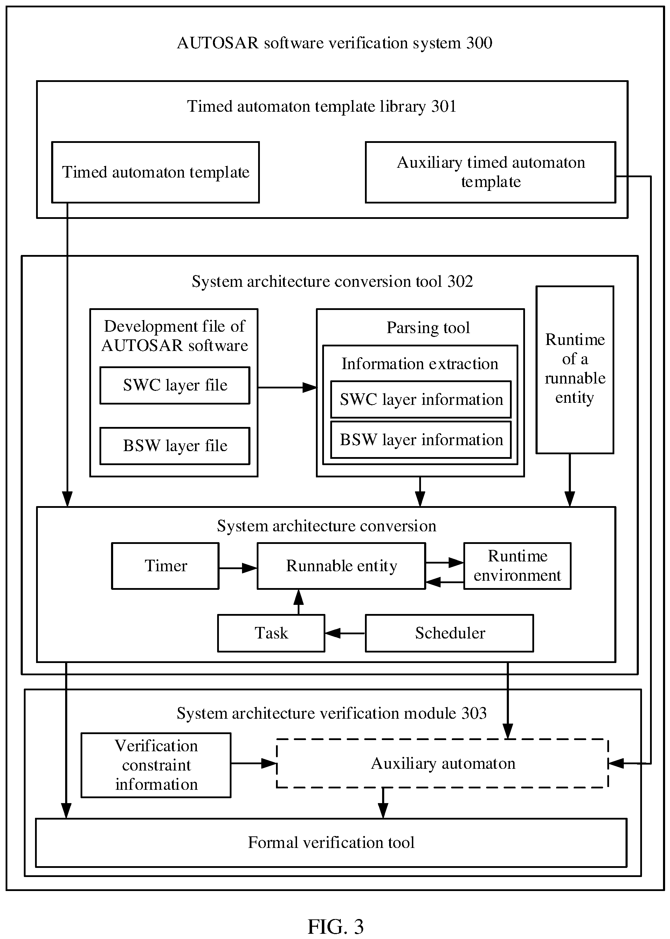

FIG. 3 is a schematic diagram of an architecture of another AUTOSAR software verification system 300 according to an embodiment of this application. As shown in FIG. 3, the AUTOSAR software verification system 300 provided in this embodiment of this application may include a timed automaton template library 301, a system architecture conversion tool 302, and a system architecture verification module 303. The timed automaton template library 301 stores a plurality of timed automaton templates and auxiliary timed automaton templates. The system architecture conversion tool 302 includes a parsing tool. The parsing tool may parse an SWC layer file and a BSW layer file in a development file of the AUTOSAR software, to obtain architecture information of a system architecture of AUTOSAR software, that is, SWC layer information and BSW layer information. The architecture information includes information about a runnable entity (Runnable), a runtime environment (RTE) of each runnable entity, a task (Task) for scheduling the runnable entity, information about a scheduler (Scheduler) of the task, and timer (Timer) information for performing timeout monitoring on the runnable entity. Based on the timed automaton template, architecture information, and runtime of the runnable entity, the system architecture can be converted into a timed automaton network. The system architecture verification module 303 may include a formal verification tool, to perform verification on the timed automaton network based on verification constraint information, and obtain a verification result of the system architecture. In a verification process, when the verification constraint information meets a condition for constructing an auxiliary timed automaton, the system architecture verification module 303 may further construct the auxiliary timed automaton based on an auxiliary timed automaton template, to complete verification of the system architecture.

The foregoing describes the AUTOSAR software verification system provided in embodiments of this application. The AUTOSAR software verification system provided in embodiments of this application can implement an AUTOSAR software verification method. The following describes the AUTOSAR software verification method provided in embodiments of this application.

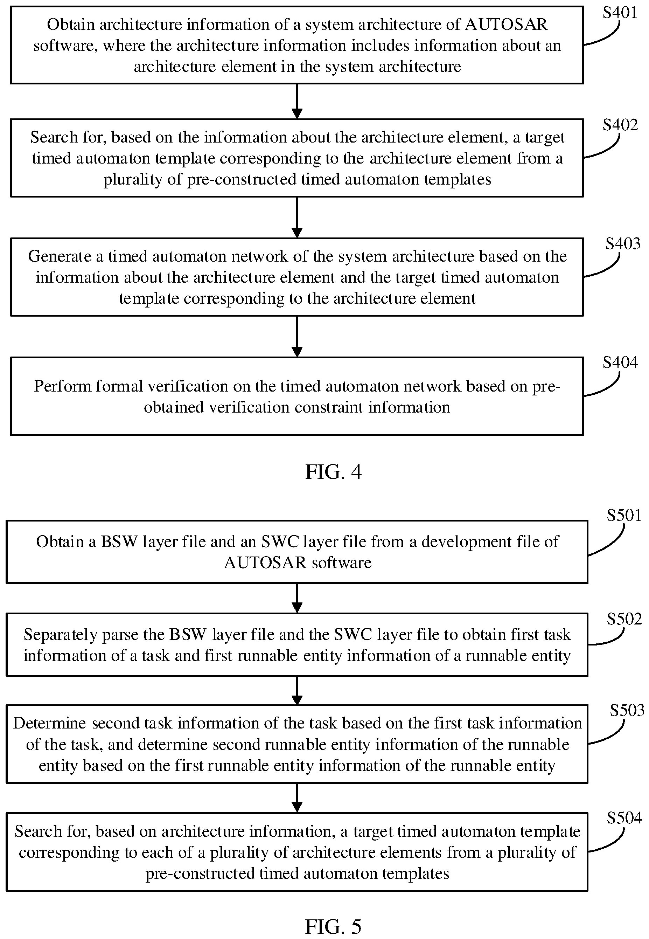

FIG. 4 is a schematic flowchart of an AUTOSAR software verification method according to this application. As shown in FIG. 4, the AUTOSAR software verification method provided in this embodiment of this application may include S401 to S404.

S401: Obtain architecture information of a system architecture of AUTOSAR software, where the architecture information includes information about an architecture element in the system architecture.

Before the AUTOSAR software is developed, a developer needs to design a function requirement of the AUTOSAR software. According to the function requirement of the AUTOSAR software and an AUTOSAR standard, the system architecture of the AUTOSAR software is designed, and the system architecture of the AUTOSAR software is generated. Herein, the system architecture of the AUTOSAR software may be provided in a form of a file, for example, a file in an .arxml format. The file corresponding to the system architecture of the AUTOSAR software may be stored in a memory.

In this embodiment of this application, the file corresponding to the system architecture may be read from the memory, to parse the file corresponding to the system architecture. Herein, a model parsing tool of the AUTOSAR software may be used to parse the file corresponding to the system architecture of the AUTOSAR software. For example, the file corresponding to the system architecture of the AUTOSAR software may be parsed by using an Artop, to obtain the architecture information of the system architecture. The architecture information includes the information about the architecture element in the system architecture. The file of the system architecture may include a file corresponding to a BSW layer and a file corresponding to an SWC layer in the system architecture. The system architecture includes a plurality of architecture elements, such as a task and a runnable entity, and a quantity of each type of architecture element is plural. The task is an architecture element of the BSW layer, and the BSW layer file records BSW layer information, that is, the BSW layer file records task information of the task. The runnable entity is an architecture element of the SWC layer, and the SWC layer file records SWC layer information, that is, the SWC layer file records runnable entity information of the runnable entity.

In some embodiments, the file corresponding to the BSW layer and the file corresponding to the SWC layer in the system architecture may be read. Then, the file corresponding to the BSW layer and the file corresponding to the SWC layer are parsed, to obtain the BSW layer information in the system architecture and the SWC layer information in the system architecture. Herein, to ensure accuracy of verifying the system architecture, the file corresponding to the BSW layer and the file corresponding to the SWC may be parsed into files in a unified language format. Then, the file corresponding to the BSW layer and the file corresponding to the SWC layer are separately parsed, to obtain the information about the architecture element.

The BSW layer information includes OS information. The OS information may include task information of each task in the OS, for example, information such as attribute information of the task, a name of a kernel partition in which the task is located, and a correspondence between the task and an RTE layer event. The SWC layer information includes the runnable entity information of the runnable entity, for example, information such as a communication mode of the runnable entity, a name of the runnable entity, a name of a component in which the runnable entity is located, an event of activating the runnable entity, and a task of activating the runnable entity. The following describes the task information and the runnable entity information in detail.

First, the task information is described in detail. The OS information includes a plurality of pieces of task information of the task and an attribute corresponding to each piece of task information of the task. For example, task information of a task A includes A, where an attribute of A is a name. The task information of the task may include first task information and second task information. The first task information is the information obtained by parsing the file corresponding to the BSW layer. The second task information is information determined based on the first task information. The first task information includes attribute information of a task, a name of a kernel partition in which the task is located, and a correspondence between the task and an RTE layer event, where the attribute information of the task may include a name of the task, a priority of the task, a maximum quantity of activation times of the task, and preemptability of the task.

In some embodiments, the first task information may further include timer information and counter information of the task. The timer information includes a time of timing for task running and a period time of the task. The counter information includes a quantity of clock ticks in a period of a timer of the task and one clock tick of the timer of the task, where the clock tick of the timer of the task identifies a time quantity in a unit of second. It may be determined, based on the timer information and the counter information of the task, that the task is a periodic task.

In this embodiment of this application, when the first task information includes the timer information and the counter information, it is determined that the second task information may be information indicating the periodic task. When the first task information does not include the timer information or the counter information, it is determined that the second task information may be information indicating that the task is an aperiodic task.

Then, the runnable entity information is described in detail. The runnable entity information of the runnable entity includes first runnable entity information and second runnable entity information. The first runnable entity information is information obtained by parsing the file corresponding to the SWC layer. The second runnable entity information is information determined based on the first runnable entity information. The first runnable entity information includes attribute information of a runnable entity, for example, a name of the runnable entity, a name of a component in which the runnable entity is located, and an event of activating the runnable entity. The second runnable entity information includes information such as a task of the event of activating the runnable entity and a communication mode of the runnable entity.

In some embodiments, as shown in FIG. 5, S401 may include S501 to S504.

S501: Obtain the BSW layer file and the SWC layer from a development file of the AUTOSAR software.

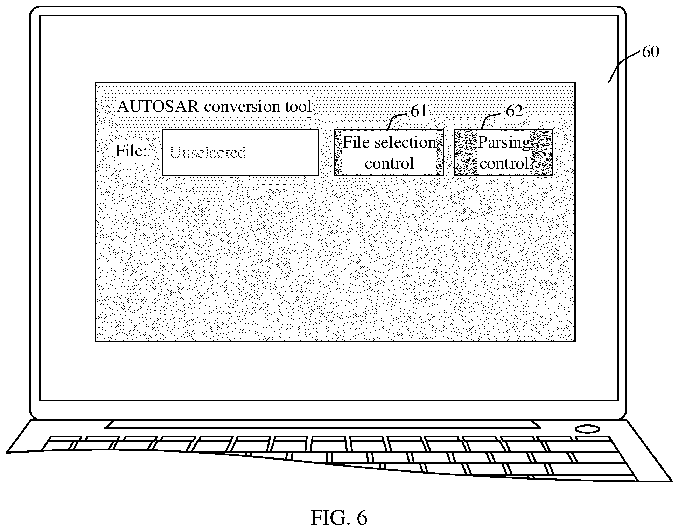

In this embodiment of this application, the BSW layer file and the SWC layer file may be read from the memory. For example, as shown in FIG. 6, an AUTOSAR conversion tool can parse the development file of the AUTOSAR software. A human-computer interaction interface 60 may display a file selection control 61 and a parsing control 62. A user performs an operation on the file selection control 61. The human-computer interaction interface 60 may display files of all layers in the development file of the AUTOSAR software. The user selects the BSW layer file and the SWC layer file from the development file of the AUTOSAR software, and the BSW layer file and the SWC layer file may be read from the memory. After the user performs an operation on the parsing control 62, the AUTOSAR conversion tool may parse the file.

S502: Separately parse the BSW layer file and the SWC layer file to obtain the first task information of the task and the first runnable entity information of the runnable entity.

In this embodiment of this application, the attribute of each piece of the task information recorded in the BSW layer file may be a character string. Herein, a character string corresponding to each piece of information in the BSW layer file may be traversed, to obtain the first task information through searching. For example, a character string of the attribute information of the task in the first task information is "taskMap". In the attribute information of the task, a character string corresponding to the name of the task is "name", a character string of the priority of the task is "priority", a character string of the maximum quantity of activation times of the task is "taskActivation", and a character string of the preemptability of the task is "preemptable".

The information related to the runnable entity recorded in the SWC layer file corresponds to a unique identifier. A character string corresponding to each piece of information in the SWC layer file may be traversed, to obtain the first runnable entity information through searching.

In some embodiments, the runnable entity is a minimum scheduling unit of the task. Therefore, there is a mapping relationship between the task and the runnable entity. For example, the BSW layer file and the SWC layer file may be separately parsed to obtain the first task information of the task and the first runnable entity information of the runnable entity. Then, based on the task information of the task and the runnable entity information of the runnable entity, a task and a runnable entity that have a mapping relationship are determined, and first task information and first runnable entity information that respectively correspond to a task and a runnable entity that do not have a mapping relationship are filtered out. For another example, to reduce occupation of a computing resource and storage space, the BSW layer file may be first parsed to obtain the first task information of the task. Then, the SWC layer file is parsed based on the task information of the task, to obtain the first runnable entity information of the runnable entity.

Herein, the task and the runnable entity that have the mapping relationship may be determined based on a mapping relationship between the task and the RTE layer event in the first task information and the event that is in the first runnable entity information and that is of activating the runnable entity, so that first runnable entity information of the runnable entity that has the mapping relationship with the task is determined. It may be understood that the mapping relationship between the runnable entity and the task is generated when the runnable entity and the task that have the mapping relationship are determined.

In some embodiments, to improve verification efficiency of the AUTOSAR software, a unique identifier may be set for each task. For example, each task may be numbered, so that each task corresponds to a task number, where the task number is a unique identifier of the task. Each runnable entity may be further set with a number. The number of the runnable entity is a number of the runnable entity under a task that has a mapping relationship with the runnable entity. For example, there is a mapping relationship between a task K and a runnable entity A, a runnable entity B, and a runnable entity C. Numbers of the runnable entity A, the runnable entity B, and the runnable entity C under the task K may be 1, 2, and 3 respectively. In this way, a correspondence between the task and the runnable entity may be established only based on the task number of the task and the number of the runnable entity, reducing occupation of storage space.

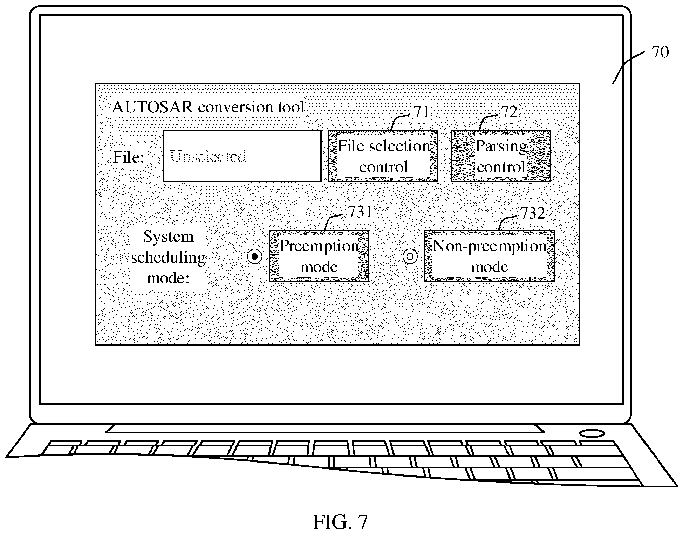

In some embodiments, before the architecture information of the system architecture is extracted, the user may further enter a system scheduling mode of the AUTOSAR software through the human-computer interaction interface. In an example, as shown in FIG. 7, a human-computer interaction interface 70 may display a file selection control 71, a parsing control 72, and a selection control of the system scheduling mode, where the selection control of the system scheduling mode includes a preemption mode control 731 and a non-preemption mode control 732. According to a verification requirement of the AUTOSAR software, the user selects the selection control of the system scheduling mode to obtain the system scheduling mode. For example, if the user needs to verify a difference between the AUTOSAR software and a user requirement when a system of the AUTOSAR software is in the preemption mode, the control 731 may be operated.

Herein, when the user needs to verify the difference between the AUTOSAR software and a user requirement when the system of the AUTOSAR software is in the preemption mode, architecture information of the system of the AUTOSAR software in the preemption mode may be obtained. When the user needs to verify a difference between the AUTOSAR software and a user requirement when the system of the AUTOSAR software is in the non-preemption mode, architecture information of the system of the AUTOSAR software in the non-preemption mode may be obtained.

In a possible implementation, S502 may include: traversing a preemptability identifier of each task in the BSW layer file, to determine a scheduling mode of the task. First task information of a task whose scheduling mode is the same as a pre-obtained system scheduling mode. For example, if scheduling modes of a task A, a task B, a task C, and a task D are the preemption mode, scheduling modes of a task E, a task F, and a task G are the non-preemption mode, and the pre-obtained system scheduling mode is the preemption mode, first task information of the task A, the task B, the task C, and the task D is extracted.

S503: Determine the second task information of the task based on the first task information of the task, and determine the second runnable entity information of the runnable entity based on the first runnable entity information of the runnable entity.

In this embodiment of this application, whether the first task information of the task includes the timer information and the counter information may be detected, to obtain a detection result of the first task information. If the detection result of the first task information is "yes", the second task information indicating that the task is the periodic task is generated. If the detection result of the first task information is "no", the second task information indicating that the task is the aperiodic task is generated.

In this embodiment of this application, the communication mode of the runnable entity may be determined based on the name of the component in which the runnable entity is located in the first runnable entity information. Based on the name of the component in which the runnable entity is located, related information of the component is determined from the SWC layer file, for example, operation data of the runnable entity, a connector (Connecter) corresponding to the component, and an interface on the connector, to determine the communication mode of the runnable entity. Herein, there are a plurality of communication modes between runnable entities, for example, a client-server (Client-Server, CS) mode, a sender-receiver (Sender-Receiver, SR) mode, an external-trigger (external-trigger) mode, and an internal-trigger (internal-trigger) mode.

In this way, the architecture information of the system architecture is obtained at a fine granularity, improving accuracy of time behavior modeling and verification of the system architecture.

S402: Search for, based on the information about the architecture element, a target timed automaton template corresponding to each of the plurality of architecture elements from a plurality of pre-constructed timed automaton templates.

The timed automaton template includes a timed automaton template of the task and a timed automaton template of the runnable entity. The timed automaton template of the runnable entity includes timed automaton templates corresponding to different communication modes, and timed automaton templates of a same communication mode include different types of timed automaton templates. A target timed automaton template corresponding to the task may be obtained through searching from the plurality of pre-constructed timed automaton templates based on the task information of the task. A target timed automaton template corresponding to the runnable entity may be obtained through searching from the plurality of pre-constructed timed automaton templates based on the runnable entity information of the runnable entity. The following describes a search for the target timed automaton template corresponding to the task and a search for the target timed automaton template corresponding to the runnable entity.

In this embodiment of this application, the search for the target timed automaton template corresponding to the task may be performed based on the preemptability and periodicity of the task in the task information of the task. For example, if the preemptability of the task is the preemption mode and the periodicity is aperiodic, the search for a timed automaton template that is in the preemption mode and that is aperiodic is performed. For another example, if the preemptability of the task is the non-preemption mode and the periodicity is aperiodic, the search for a timed automaton template that is in the non-preemption mode and that is aperiodic is performed.

In this embodiment of this application, the search for the target timed automaton template corresponding to the runnable entity may be performed from a plurality of pre-constructed timed automaton templates of the runnable entity based on the runnable entity information of the runnable entity. For example, the search for the target timed automaton template corresponding to the runnable entity is performed based on the communication mode of the runnable entity in the runnable entity information. Because the timed automaton templates in the same communication mode may further include the different types of timed automaton templates, in a process of searching for the timed automaton template corresponding to the runnable entity, based on the runnable entity information of the runnable entity, information such as, whether the runnable entity has a queue, whether the runnable entity is concurrent, and whether the runnable entity has an invocation timeout may be determined. The target timed automaton template corresponding to the runnable entity is obtained through searching from a plurality of timed automaton templates in the same communication mode. Specifically, when the runnable entity whose communication mode is the CS mode searches for the target timed automaton template, invocation mode information such as, whether the runnable entity is invoked concurrently, whether the runnable entity is invoked synchronously, whether an invocation timeout occurs, whether another event is activated after client invocation, and whether the runnable entity is invoked internally may be determined. When the runnable entity whose communication mode is the SR mode searches for the target timed automaton template, information such as whether the runnable entity exists a waiting point, whether the runnable entity is a receiver or a sender, whether the runnable entity serving as a receiver activates another event, whether the runnable entity is explicitly invoked, and whether a queue exists may be determined.

Herein, in the CS mode, as invocation modes of the runnable entities are different, timed automaton templates obtained through searching are different. For example, communication modes of a runnable entity 1, a runnable entity 2, and a runnable entity 3 are all CS modes. An invocation mode of the runnable entity 1 may be concurrent invocation, non-synchronous invocation, encountering an invocation timeout, causing activation of another event after client invocation, and external invocation. An invocation mode of the runnable entity 2 may be non-concurrent invocation, synchronous invocation, encountering an invocation timeout, causing activation of another event after client invocation, and external invocation. An invocation mode of the runnable entity 3 may be non-concurrent invocation, non-synchronous invocation, encountering an invocation timeout, causing activation of another event after client invocation, and internal invocation. In this case, target timed automaton templates that match the runnable entity 1, the runnable entity 2, and the runnable entity 3 are different.

Similarly, in the SR mode, if the runnable entity information of the runnable entities is different, timed automaton templates obtained through searching are also different. For example, the communication modes of the runnable entity 1, the runnable entity 2, and the runnable entity 3 are all SR modes. The runnable entity 1 is a transmit end, exists the waiting point, is explicitly invoked, and has the queue. The runnable entity 2 is a receive end, has no waiting point, is implicitly invoked, and has the queue. The runnable entity 3 is a receive end, exists the waiting point, is implicitly invoked, and has no queue. Target timed automaton templates that match the runnable entity 1, the runnable entity 2, and the runnable entity 3 are different.

Herein, a timed automaton template of each runnable entity includes a runtime environment and a scheduling mode. A timed automaton template corresponding to the communication mode being the CS mode further includes timeout monitoring.

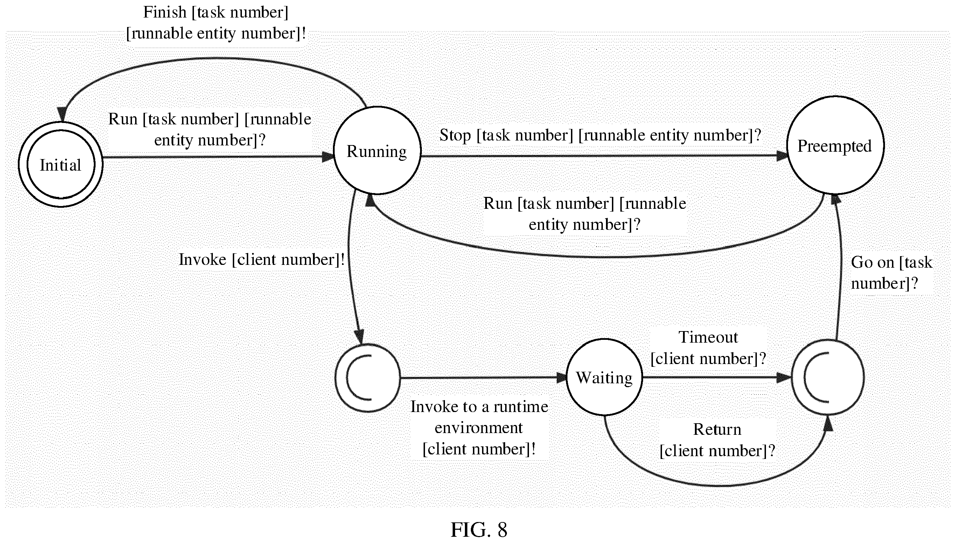

For example, as shown in FIG. 8, the target timed automaton template corresponding to the runnable entity whose communication mode is the CS mode. When the runnable entity serving as a client receives a running signal, the runnable entity serving as the client enters a running state. Herein, the running signal includes a task number of a task and a number of the runnable entity that serves as the client, that is, "Run [task number] [runnable entity number]?". When the runnable entity serving as the client receives a stop signal in the running state, the task corresponding to the task number and the runnable entity serving as the client enter preemption states. Herein, the stop signal includes the task number of the task and the number of the runnable entity serving as the client, that is, "Stop [task number] [runnable entity number]?". When the runnable entity serving as the client receives the running signal in the preemption state, the runnable entity serving as the client returns to the running state, that is, "Run [task number] [runnable entity number]?". Because a plurality of runnable entities may all serve as clients, each client serving as the runnable entity may be marked with a number, that is, a client number. When the runnable entity serving as the client is in the running state and the runnable entity serving as the client invokes a runnable entity serving as a server, the runnable entity serving as the client sends an invocation signal to a scheduler. The invocation signal includes a client number of the runnable entity serving as the client, that is, "Invoke [customer number]!". The scheduler sends the invocation signal to a runtime environment and moves to a waiting location to wait for a response signal. The response signal may be "Return [client number]?" or "Timeout [client number]?". After receiving the response signal, the runnable entity serving as the client sends a notification signal to the scheduler, to notify the scheduler that information about the runnable entity serving as the server is determined, and the task corresponding to the task number may continue to be executed. The notification signal includes the task number of the task, that is, "Go on [task number]".

S403: Generate a timed automaton network of the system architecture based on the architecture information and the target timed automaton template corresponding to each architecture element.

In this embodiment of this application, the information about the architecture element in the architecture information may be filled in the target timed automaton template corresponding to each architecture element, to generate a timed automaton corresponding to each architecture element, and generate the timed automaton network of the system architecture. Herein, the timed automaton template includes to-be-filled-in information and an attribute of the to-be-filled-in information. For each architecture element, a search for information corresponding to an attribute that is the same as an attribute of to-be-filled information may be performed, and the information is filled in the to-be-filled information.

Specifically, a timed automaton of the task may be constructed based on the task information of the task in the architecture information and the target timed automaton template corresponding to the task. The task information required for constructing the timed automaton of the task may include information such as a unique identifier of the task, a name of the task, a priority of the task, a maximum quantity of activation times of the task, a name of a kernel partition in which the task is located, and an event of activating the task. Herein, in a case in which the task is the periodic task, the task information required for constructing the timed automaton of the task may further include timer information and counter information, that is, a time when the task starts to run, a period time of the task, a quantity of clock ticks in a period of a timer of the task, one clock tick of the timer of the task, and a time quantity in a unit of second identified by the clock tick quantity of the timer of the task.

A timed automaton of the runnable entity may be constructed based on the runnable entity information of the runnable entity in the architecture information, predetermined runtime information of the runnable entity, and the target timed automaton template corresponding to the runnable entity. The runnable entity information required for constructing the timed automaton of the runnable entity may include a name of the runnable entity, a name of a component in which the runnable entity is located, a runtime of the runnable entity, a time of activating the runnable entity, and a task of an event of activating the runnable entity.

The runtime information of the runnable entity may be preconfigured. The runtime of the runnable entity may be determined based on the first runnable entity information of the runnable entity. For example, after the first runnable entity information of the runnable entity is determined, information such as a name of each runnable entity may be displayed on a human-computer interaction interface. The user may enter the runtime of the runnable entity through the human-computer interaction interface. The runtime of the runnable entity is a time range, a minimum value in the time range is a best execution time of the runnable entity, and a maximum value in the time range is a worst execution time of the runnable entity.

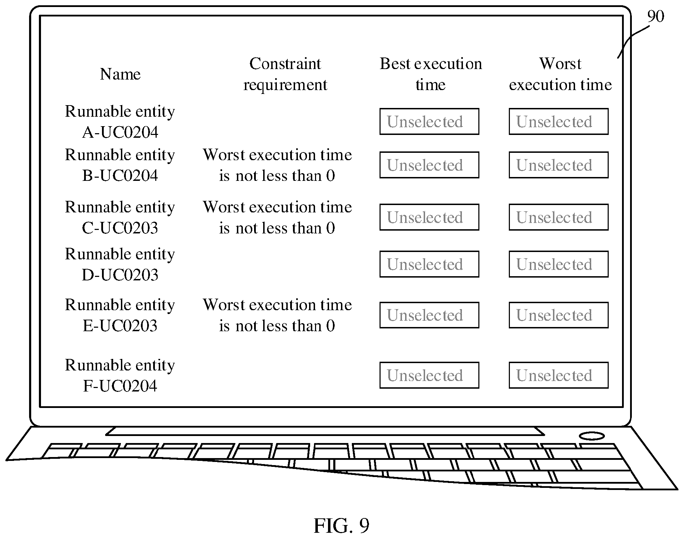

As shown in FIG. 9, after the runnable entity information of the runnable entity is determined, the name of the runnable entity and a constraint requirement on each runnable entity in the AUTOSAR standard may be displayed on a human-computer interaction interface 90. Each runnable entity corresponds to an executable time of each runnable entity that the user enters according to a verification requirement for the AUTOSAR software in a worst case. For example, runnable entities include a runnable entity A-UC0204, a runnable entity B-UC0204, a runnable entity C-UC0203, a runnable entity D-UC0203, a runnable entity E-UC0203, and a runnable entity F-UC0204. None of the runnable entity A-UC0204, the runnable entity D-UC0203, and the runnable entity F-UC0204 has a constraint requirement. A constraint requirement of the runnable entity B-UC0204 is a worst execution time is not less than 0. A constraint requirement of the runnable entity C-UC0203 is that a worst execution time is not less than 0. A constraint requirement of the runnable entity E-UC0203 is that a worst execution time is not less than 0. Based on a verification requirement of the AUTOSAR software, the user fills in a best execution time and a worst execution time in the control corresponding to each runnable entity.

In addition, runnable entities of different communication modes are different from runnable entity information required for constructing timed automata of the runnable entities. For example, for the runnable entity whose communication mode is the CS mode, the runnable entity information required in a process of constructing the timed automaton of the runnable entity may further include information such as a length of a queue invoked by the runnable entity and an invocation timeout time. For another example, for the runnable entity whose communication mode is the SR mode, the runnable entity information required in a process of constructing the timed automaton of the runnable entity may further include information such as a length of a queue invoked by the runnable entity, a timeout time of a receiver waiting point, and a timeout time of a sender waiting point.

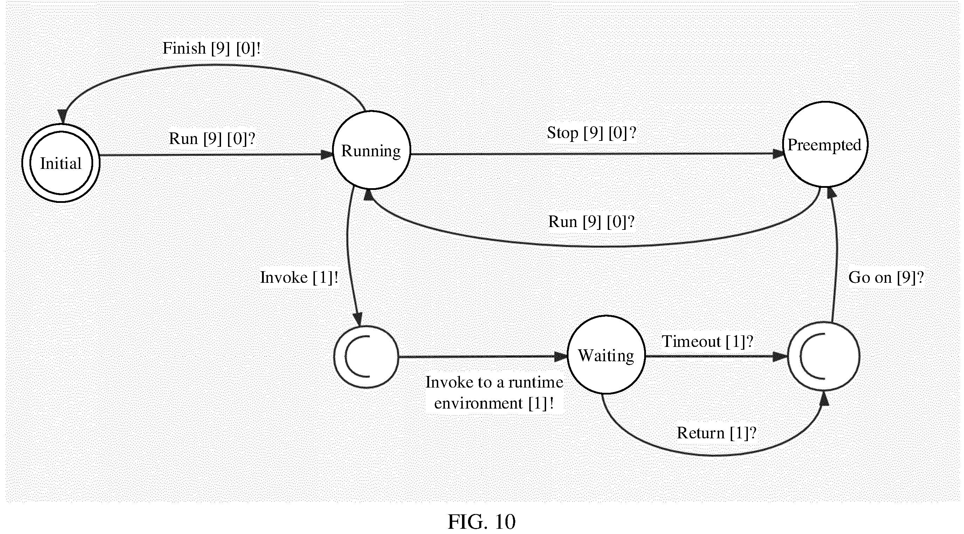

For example, the runnable entity whose communication mode is the CS mode is located on a task whose unique identifier is 9, and serves as the client to communicate with a runnable entity that serves as the server. A location of the runnable entity that serves as the client in the task whose unique ID is 9 is 0. Because there may be a plurality of runnable entities serving as clients that invoke a same runnable entity serving as the server, each invocation of the runnable entity serving as the client is marked with a number. Herein, the number of the runnable entity serving as the client is 1, in other words, the runnable entity whose client number is 1 invokes the runnable entity serving as the server. Specifically, as shown in FIG. 10, after the timed automaton template of the runnable entity shown in FIG. 8 is instantiated, the timed automaton of the runnable entity is obtained.

When the runnable entity serving as the client receives a running signal, the runnable entity serving as the client enters the running state. Herein, the running signal includes a task number "9" of the task and a number "0" of the runnable entity serving as the client, that is, the running signal is "Run [9] [0]?". When the runnable entity serving as the client receives a stop signal in the running state, the task and the runnable entity serving as the client enter preemption states. The stop signal is "Stop [9] [0]?". When the runnable entity serving as the client receives the running signal in the preemption state, the runnable entity serving as the client returns to the running state. When the runnable entity serving as the client is in the running state and the runnable entity serving as the client invokes the runnable entity serving as the server, the runnable entity serving as the client sends an invocation signal to the scheduler. The invocation signal is "Invoke [1]!" The scheduler sends the invocation signal to a runtime environment and moves to a waiting location to wait for a response signal. The response signal may be "Return [1]?" or "Timeout [1]?". After receiving the response signal, the runnable entity serving as the client sends a notification signal to the scheduler, to notify the scheduler that information about the runnable entity serving as the server is determined, and the task corresponding to the task number may continue to be executed. The notification signal is "Go on [9]".

In this way, a timed automaton is constructed based on fine-grained architecture information of the system architecture, so that a behavior of the system architecture can be accurately described, improving accuracy of a verification result.

S404: Perform formal verification on the timed automaton network based on pre-obtained verification constraint information.

The verification constraint information is a verification requirement of the user, for example, a system property of the AUTOSAR software system. The system property of AUTOSAR software system includes time attributes, such as delay time, deadlock, schedulability and event trigger time. Herein, the user may enter the verification constraint information of the user through a human-computer interaction interface. For example, before formal verification starts, the time attribute may be displayed on the human-computer interaction interface, and the user selects the time attribute through the human-computer interaction interface according to a verification requirement. Based on the time attribute selected by the user, formal verification of the timed automaton network is performed.

In some embodiments, the verification constraint information includes the time attribute, for example, the time attribute may be the deadlock, and the time attribute may also be the schedulability.

In some other embodiments, the verification constraint information may include the time attribute and a time attribute value. The time attribute may be the delay time, or the time attribute may be the event trigger time. If the time attribute is the delay time, the time attribute value is a time value corresponding to the delay time. If the time attribute is the event trigger time, the time attribute value is a time value of the event trigger time. When the time attribute in the verification constraint information is the delay time or the event trigger time, a search for an auxiliary timed automaton template corresponding to the time attribute is performed from the plurality of pre-constructed timed automaton templates based on the time attribute. After the auxiliary timed automaton template corresponding to the time attribute is obtained through searching, an auxiliary timed automaton of the time attribute is generated based on time attribute information and the auxiliary timed automaton template. A verification file of the system architecture is generated based on the auxiliary timed automaton and the timed automaton network. The verification file of the system architecture is input into a formal verification tool for formal verification.

According to the AUTOSAR software verification method provided in embodiments of this application, the timed automaton network of the system architecture of the AUTOSAR software is generated based on the timed automaton template converted from the AUTOSAR standard and the architecture information of the system architecture of the AUTOSAR software, so that a formal description can be performed on the system architecture of the AUTOSAR software, and formal verification can be performed on the timed automaton network. In this way, verification of the AUTOSAR software can be completed, and the AUTOSAR software does not need to be verified after the AUTOSAR software is converted into code, reducing development costs and error correction costs, and improving development efficiency of the AUTOSAR software.

The foregoing describes the AUTOSAR software verification method provided in embodiments of this application. Next, an AUTOSAR software verification apparatus provided in this embodiment of this application is described.

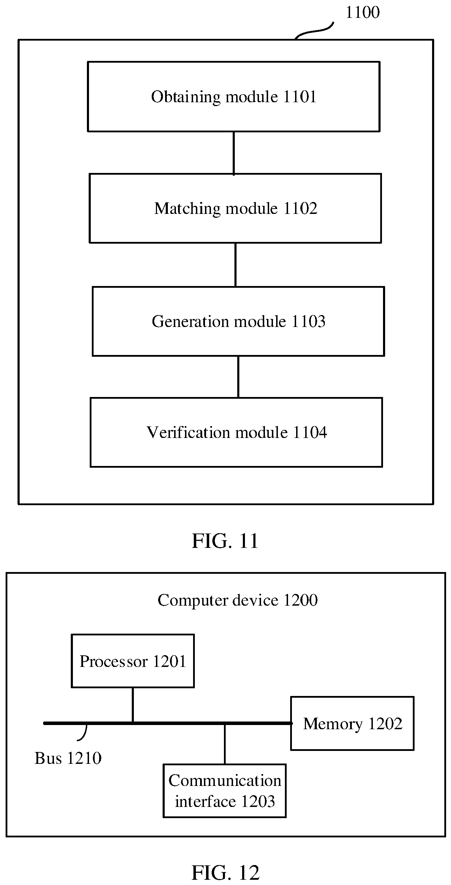

FIG. 11 is a schematic diagram of a structure of an AUTOSAR software verification apparatus 1100 according to an embodiment of this application. As shown in FIG. 11, the AUTOSAR software verification apparatus 1100 provided in this embodiment of this application may include an obtaining module 1101, a matching module 1102, a generation module 1103, and a verification module 1104.

The obtaining module 1101 is configured to obtain architecture information of a system architecture of an AUTOSAR software, where the architecture information includes information about an architecture element in the system architecture.

The matching module 1102 is configured to search for, based on the information about the architecture element, a target timed automaton template corresponding to the architecture element from a pre-constructed timed automaton template, where the timed automaton template is constructed based on an AUTOSAR standard, and the timed automaton template represents a behavior of the system architecture in terms of time.

The generation module 1103 is configured to generate a timed automaton network of the system architecture based on the information about the architecture element and the target timed automaton template corresponding to the architecture element.

The verification module 1104 is configured to perform formal verification on the timed automaton network based on pre-obtained verification constraint information.

In a possible implementation, the architecture element includes a runnable entity and a task, the information about the architecture element includes runnable entity information of the runnable entity and task information of the task, and the matching module 1102 is configured to search for, based on the task information of the task, a target timed automaton template corresponding to the task from the plurality of timed automaton templates; and
search for, based on the runnable entity information of the runnable entity, a target timed automaton template corresponding to the runnable entity from the plurality of timed automaton templates.

In a possible implementation, the architecture element includes a runnable entity and a task, the information about the architecture element includes runnable entity information of the runnable entity and task information of the task, and the generation module 1103 is configured to determine runtime information of the runnable entity based on the runnable entity information of the runnable entity;
generate, based on the runnable entity information of the runnable entity, the runtime information, and a timed automaton template corresponding to the runnable entity, a timed automaton corresponding to the runnable entity;
generate, based on the task information of the task and a timed automaton template corresponding to the task, a timed automaton corresponding to the task; and
generate the timed automaton network of the system architecture based on the timed automaton corresponding to the runnable entity and the timed automaton corresponding to the task.

In a possible implementation, the runnable entity information of the runnable entity includes at least one communication mode corresponding to the runnable entity; the matching module is configured to search for a target timed automaton template of the runnable entity in the at least one communication mode from the plurality of timed automaton templates; and
the generation module is configured to generate a target timed automaton of the runnable entity in each of the at least one communication mode based on the runnable entity information of the runnable entity, the runtime information, and the target timed automaton template of the runnable entity in the at least one communication mode; and
merge a target timed automaton template of the runnable entity in each communication mode to obtain the timed automaton of the runnable entity.

In a possible implementation, the obtaining module 1101 is configured to: read a development file of the AUTOSAR software; and parse the development file of the AUTOSAR software to obtain runnable entity information of a runnable entity and task information of a task.

In a possible implementation, the runnable entity information of the runnable entity includes an event of activating the runnable entity, the task information of the task includes an event of activating the task, and the obtaining module 1101 is configured to determine, based on a task of the event of activating the runnable entity and the event of activating the task, a runnable entity and a task that have a mapping relationship; and
generate mapping relationship information between the runnable entity and the task, and filter out a runnable entity and a task that do not have a mapping relationship.

In a possible implementation, the model verification constraint information includes a time attribute of the system architecture and an attribute value of the time attribute; and the verification module 1104 is configured to search for a target timed automaton template corresponding to the time attribute from the plurality of timed automaton templates;
generate, based on the attribute value of the time attribute, the architecture information, and the auxiliary timed automaton template, an auxiliary timed automaton corresponding to the time attribute; and
perform formal verification on the timed automaton network and the auxiliary timed automaton.

In a possible implementation, the verification module 1104 is configured to generate a verification file of the system architecture based on the timed automaton network and the auxiliary timed automaton; and
input the verification file into a formal verification tool for formal verification.

It should be noted that the AUTOSAR software verification apparatus provided in this embodiment of this application can implement each process in the embodiment corresponding to the AUTOSAR software verification method in FIG. 3. To avoid repetition, details are not described herein again.

According to the AUTOSAR software verification apparatus provided in this embodiment of this application, the timed automaton network of the system architecture of the AUTOSAR software is generated based on the timed automaton template converted from the AUTOSAR standard and the architecture information of the system architecture of the AUTOSAR software, so that a formal description can be performed on the system architecture of the AUTOSAR software, and formal verification can be performed on the timed automaton network. In this way, verification of the AUTOSAR software can be completed, and the AUTOSAR software does not need to be verified after the AUTOSAR software is converted into code, reducing development costs and error correction costs, and improving development efficiency of the AUTOSAR software.

FIG. 12 is a schematic diagram of a structure of a computer device 1200 according to an embodiment of this application. As shown in FIG. 12, the computer device provided in this embodiment of this application may be configured to implement the AUTOSAR software verification method described in the foregoing method embodiments.

The computer device 1200 may include a processor 1201 and a memory 1202 that stores computer program instructions.

Specifically, the processor 1201 may include a central processing unit (CPU), or an application-specific integrated circuit (Application Specific Integrated Circuit, ASIC), or may be configured as one or more integrated circuits that implement embodiments of this application.

The memory 1202 may include a mass memory used for data or instructions. As an example rather than a limitation, the memory 1202 may include a hard disk drive (Hard Disk Drive, HDD), a floppy disk drive, a flash memory, an optical disc, a magnetic disc, a magnetic tape, or a universal serial bus (Universal Serial Bus, USB) drive, or a combination of two or more of the foregoing. In an appropriate case, the memory 1202 may include a removable medium or an irremovable (or fixed) medium. In an appropriate case, the memory 1202 may be inside or outside an integrated gateway disaster recovery device. In a specific embodiment, the memory 1202 is a non-volatile solid-state memory.

The memory may include a read-only memory (ROM), a random access memory (RAM), a magnetic disk storage medium device, an optical storage medium device, a flash memory device, and an electrical, optical, or another physical/tangible memory storage device. Therefore, usually the memory includes one or more tangible (non-transitory) computer-readable storage media (for example, a memory device) that encode software including computer executable instructions, and when the software is executed (for example, executed by one or more processors), it is operable to perform operations described with reference to the methods in this application.

The processor 1201 reads and executes the computer program instructions stored in the memory 1202, to implement any AUTOSAR software verification method in the foregoing embodiments.

In an example, an electronic device may further include a communication interface 1203 and a bus 1210. As shown in FIG. 12, the processor 1201, the memory 1202, and the communication interface 1203 are connected and communicate with each other through the bus 1210.

The communication interface 1203 is mainly configured to implement communication between modules, apparatuses, units, and/or devices in embodiments of this application.

The bus 1210 includes hardware, software, or both, and couples components of the device with each other. As an example rather than a limitation, the bus may include an accelerated graphics port (AGP) or another graphics bus, an enhanced industry standard architecture (EISA) bus, a front-end bus (FSB), a hyper-transport (HT) interconnect, an industry standard architecture (ISA) bus, an infinite bandwidth interconnect, a low pin count (LPC) bus, a memory bus, a micro-channel architecture (MCA) bus, a peripheral component interconnect (PCI) bus, a PCI-Express (PCI-X) bus, a serial advanced technology attachment (SATA) bus, a Video Electronics Standards Association local (VLB) bus, another suitable bus, or a combination of two or more of these. In an appropriate case, the bus 1210 may include one or more buses. Although a specific bus is described and shown in this embodiment of this application, any appropriate bus or interconnection is considered in this application.

In addition, with reference to the foregoing embodiments, an embodiment of this application may provide a computer storage medium for implementation. The computer storage medium stores computer program instructions. When the computer program instructions are executed by a processor, any signal processing method in the foregoing embodiments is implemented.

The foregoing functional blocks shown in the foregoing structural block diagrams may be implemented as hardware, software, firmware, or a combination thereof. When implemented in a hardware manner, the functional blocks may be, for example, an electronic circuit, an application-specific integrated circuit (ASIC), appropriate firmware, a plug-in, or a function card. When implemented in a software manner, an element in this application is a program or a code segment that is used to execute a required task. The program or the code segment may be stored in a machine readable medium, or may be transmitted on a transmission medium or a communication link by using a data signal carried in a carrier. A "machine-readable medium" may include any medium capable of storing or transmitting information. An example of the machine-readable medium includes an electronic circuit, a semiconductor memory device, a ROM, a flash memory, an erasable ROM (EROM), a floppy disk, a CD-ROM, an optical disc, a hard disk, an optical fiber medium, a radio frequency (RF) link, or the like. The code segment may be downloaded through a computer network such as Internet or an intranet.

All or some of the foregoing embodiments may be implemented by software, hardware, firmware, or any combination thereof. When software is used to implement the foregoing embodiments, all or some of the embodiments may be implemented in a form of a computer program product. The computer program product includes one or more computer instructions. When the computer program instructions are loaded and executed on a computer, the procedure or functions according to embodiments of this application are completely or partially generated. The computer may be a general-purpose computer, a dedicated computer, a computer network, or another programmable apparatus. The computer instructions may be stored in the computer-readable storage medium, or transmitted by using the computer-readable storage medium. The computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

It should be further noted that, in the example embodiments mentioned in this application, some methods or systems are described based on a series of steps or apparatuses. However, this application is not limited to a sequence of the foregoing steps. In other words, the steps may be performed in the sequence mentioned in the embodiments, or may be performed in a sequence different from that in the embodiments, or several steps are performed simultaneously.

The various aspects of this application are described herein with reference to the flowcharts and/or block diagrams of the method, the apparatus (system), and the computer program product according to embodiments of this application. It will be understood that each block of the flowcharts and/or block diagrams, and combinations of blocks in the flowcharts and/or block diagrams, can be implemented by computer program instructions. These computer program instructions may be provided to a general-purpose computer, a special-purpose computer, or a processor of another programmable data processing apparatus to produce a machine, so that the instructions executed by the processor of the computer or the other programmable data processing apparatus enable implementation of a function/action specified in one or more blocks of the flowcharts and/or block diagrams. The processor may be, but is not limited to, a general purpose processor, a dedicated processor, a special application processor, or a field programmable logic circuit. It may be further understood that each block in the block diagrams and/or the flowcharts and a combination of blocks in the block diagrams and/or the flowcharts may also be implemented by dedicated hardware that performs a specified function or action, or may be implemented by a combination of dedicated hardware and computer instructions.

A person of ordinary skill in the art may be further aware that, in combination with the examples described in embodiments disclosed in this specification, units and algorithm steps may be implemented by electronic hardware, computer software, or a combination thereof. To clearly describe interchangeability between hardware and software, the foregoing has generally described compositions and steps of each example based on functions. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

The foregoing descriptions are merely example specific implementations of this application, but are not intended to limit the protection scope of this application. Any variation or replacement readily figured out by a person skilled in the art within the technical scope disclosed in this application shall fall within the protection scope of this application. Therefore, the protection scope of this application should be subject to the protection scope of the claims.

A person of ordinary skill in the art may be further aware that, in combination with the examples described in embodiments disclosed in this specification, units and algorithm steps may be implemented by electronic hardware, computer software, or a combination thereof. To clearly describe interchangeability between hardware and software, the foregoing has generally described compositions and steps of each example based on functions. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

The foregoing descriptions are merely example specific implementations of this application, but are not intended to limit the protection scope of this application. Any variation or replacement readily figured out by a person skilled in the art within the technical scope disclosed in this application shall fall within the protection scope of this application. Therefore, the protection scope of this application should be subject to the protection scope of the claims.

## Claims

1. An AUTOSAR software verification method, comprising:
obtaining architecture information of a system architecture of AUTOSAR software, wherein the architecture information comprises information about an architecture element in the system architecture;
searching for, based on the information about the architecture element, a target timed automaton template corresponding to the architecture element from a pre-constructed timed automaton template, wherein the timed automaton template is constructed based on an AUTOSAR standard, and the timed automaton template represents a behavior of the system architecture in terms of time;
generating a timed automaton network of the system architecture based on the information about the architecture element and the target timed automaton template corresponding to the architecture element; and
performing formal verification on the timed automaton network based on pre-obtained verification constraint information to obtain a verification result of the system architecture of the AUTOSAR software.

2. The method according to claim 1, wherein the architecture element comprises a runnable entity and a task, and the information about the architecture element comprises runnable entity information of the runnable entity and task information of the task; and
the searching for, based on the information about the architecture element, a target timed automaton template corresponding to the architecture element from a plurality of pre-constructed timed automaton templates comprises:
searching for, based on the task information of the task, a target timed automaton template corresponding to the task from the plurality of timed automaton templates; and
searching for, based on the runnable entity information of the runnable entity, a target timed automaton template corresponding to the runnable entity from the plurality of timed automaton templates.

3. The method according to claim 1, wherein the architecture element comprises a runnable entity and a task, and the architecture information comprises runnable entity information of the runnable entity and task information of the task; and
the generating a timed automaton network of the system architecture based on the information about the architecture element, pre-obtained runtime information, and a target timed automaton template corresponding to each architecture element comprises:
determining runtime information of the runnable entity based on the runnable entity information of the runnable entity;
generating, based on the runnable entity information of the runnable entity, the runtime information, and a timed automaton template corresponding to the runnable entity, a timed automaton corresponding to the runnable entity;
generating, based on the task information of the task and a timed automaton template corresponding to the task, a timed automaton corresponding to the task; and
generating the timed automaton network of the system architecture based on the timed automaton corresponding to the runnable entity and the timed automaton corresponding to the task.

4. The method according to claim 3, wherein the runnable entity information of the runnable entity comprises at least one communication mode corresponding to the runnable entity; and the searching for, based on the architecture information, a target timed automaton template corresponding to each of the plurality of architecture elements from a plurality of pre-constructed timed automaton templates comprises:
searching for a target timed automaton template of the runnable entity in the at least one communication mode from the plurality of timed automaton templates; and
the generating, based on the runnable entity information of the runnable entity, the runtime information, and a timed automaton template corresponding to the runnable entity, a timed automaton corresponding to the runnable entity comprises:
generating a target timed automaton of the runnable entity in each of the at least one communication mode based on the runnable entity information of the runnable entity, the runtime information, and the target timed automaton template of the runnable entity in the at least one communication mode; and
merging a target timed automaton template of the runnable entity in each communication mode to obtain the timed automaton of the runnable entity.

5. The method according to claim 1, wherein the obtaining architecture information of a system architecture of AUTOSAR software comprises:
reading a development file of the AUTOSAR software; and
parsing the development file of the AUTOSAR software to obtain runnable entity information of a runnable entity and task information of a task.

6. The method according to claim 5, wherein the runnable entity information of the runnable entity comprises an event of activating the runnable entity, and the task information of the task comprises an event of activating the task; and the parsing the architecture information of the system architecture to obtain runnable entity information of a runnable entity and task information of a task comprises:
determining, based on a task of the event of activating the runnable entity and the event of activating the task, a runnable entity and a task that have a mapping relationship; and
generating mapping relationship information between the runnable entity and the task, and filtering out a runnable entity and a task that do not have a mapping relationship.

7. The method according to claim 1, wherein the model verification constraint information comprises a time attribute of the system architecture and an attribute value of the time attribute; and the performing formal verification on the timed automaton network based on pre-obtained verification constraint information comprises:
searching for a target timed automaton template corresponding to the time attribute from the plurality of timed automaton templates;
generating, based on the attribute value of the time attribute, the architecture information, and an auxiliary timed automaton template, an auxiliary timed automaton corresponding to the time attribute; and
performing formal verification on the timed automaton network and the auxiliary timed automaton.

8. The method according to claim 7, wherein the performing formal verification on the timed automaton network and the auxiliary timed automaton based on the model verification constraint information comprises:
generating a verification file of the system architecture based on the timed automaton network and the auxiliary timed automaton; and
inputting the verification file into a formal verification tool for formal verification.

9. An AUTOSAR software verification apparatus, comprising:
an obtaining module, configured to obtain architecture information of a system architecture of AUTOSAR software, wherein the architecture information comprises information about an architecture element in the system architecture;
a matching module, configured to search for, based on the architecture information, a target timed automaton template corresponding to the architecture element from a pre-constructed timed automaton template, wherein the timed automaton template is constructed based on an AUTOSAR standard, and the timed automaton template represents a behavior of the system architecture in terms of time;
a generation module, configured to generate a timed automaton network of the system architecture based on the architecture information and the target timed automaton template corresponding to the architecture element; and
a verification module, configured to perform formal verification on the timed automaton network based on pre-obtained verification constraint information.

10. The apparatus according to claim 9, wherein the architecture element comprises a runnable entity and a task, the information about the architecture element comprises runnable entity information of the runnable entity and task information of the task, and the matching module is configured to search for, based on the task information of the task, a target timed automaton template corresponding to the task from the plurality of timed automaton templates; and
search for, based on the runnable entity information of the runnable entity, a target timed automaton template corresponding to the runnable entity from the plurality of timed automaton templates.

11. The apparatus according to claim 9, wherein the architecture element comprises a runnable entity and a task, the information about the architecture element comprises runnable entity information of the runnable entity and task information of the task, and the generation module is configured to determine runtime information of the runnable entity based on the runnable entity information of the runnable entity;
generate, based on the runnable entity information of the runnable entity, the runtime information, and a timed automaton template corresponding to the runnable entity, a timed automaton corresponding to the runnable entity;
generate, based on the task information of the task and a timed automaton template corresponding to the task, a timed automaton corresponding to the task; and
generate the timed automaton network of the system architecture based on the timed automaton corresponding to the runnable entity and the timed automaton corresponding to the task.

12. The apparatus according to claim 11, wherein the runnable entity information of the runnable entity comprises at least one communication mode corresponding to the runnable entity; the matching module is configured to search for a target timed automaton template of the runnable entity in the at least one communication mode from the plurality of timed automaton templates; and
the generation module is configured to generate a target timed automaton of the runnable entity in each of the at least one communication mode based on the runnable entity information of the runnable entity, the runtime information, and the target timed automaton template of the runnable entity in the at least one communication mode; and
merge a target timed automaton template of the runnable entity in each communication mode to obtain the timed automaton of the runnable entity.

13. The apparatus according to claim 9, wherein the obtaining module is configured to: read a development file of the AUTOSAR software; and parse the development file of the AUTOSAR software to obtain runnable entity information of a runnable entity and task information of a task.

14. The apparatus according to claim 13, wherein the runnable entity information of the runnable entity comprises an event of activating the runnable entity, the task information of the task comprises the event of activating the task, and the obtaining module is configured to determine, based on a task of the event of activating the runnable entity and the event of activating the task, a runnable entity and a task that have a mapping relationship; and
generate mapping relationship information between the runnable entity and the task, and filter out a runnable entity and a task that do not have a mapping relationship.

15. The apparatus according to claim 9, wherein the model verification constraint information comprises a time attribute of the system architecture and an attribute value of the time attribute; and the verification module is configured to search for a target timed automaton template corresponding to the time attribute from the plurality of timed automaton templates;
generate, based on the attribute value of the time attribute, the architecture information, and an auxiliary timed automaton template, an auxiliary timed automaton corresponding to the time attribute; and
perform formal verification on the timed automaton network and the auxiliary timed automaton.

16. The apparatus according to claim 15, wherein the verification module is configured to generate a verification file of the system architecture based on the timed automaton network and the auxiliary timed automaton; and
input the verification file into a formal verification tool for formal verification.

17. A computer device, comprising a processor and a memory, wherein the memory stores executable code, and when the processor executes the executable code, the method according to any one of claims 1 to 8 is implemented.

18. A computer storage medium, wherein the computer storage medium stores a program or instructions, and when the program or the instructions are executed by a processor, the method according to any one of claims 1 to 8 is implemented.
